# EUROPÄISCHE PATENTSCHRIFT

(11) **EP 2 244 855 B1**
(45) Veröffentlichungstag und Bekanntmachung des Hinweises auf die Patenterteilung: **02.11.2016**
(21) Anmeldenummer: 09703213.0
(22) Anmeldetag: 23.01.2009
(51) Int. Cl.: B23K 9/29

(54) **GASDÜSENBEFESTIGUNG**
GAS NOZZLE ATTACHMENT
SYSTÈME DE FIXATION D'UNE BUSE À GAZ

(30) Priorität: 23.01.2008 AT 912008
(43) Veröffentlichungstag der Anmeldung: 03.11.2010
(73) Patentinhaber: Fronius International GmbH, 4643 Pettenbach (AT)
(72) Erfinder: BICHLER, Thomas, A-4553 Schlierbach (AT); EHRENBRANDNER, Stefan, A-4563 Micheldorf (AT); FÜRLINGER, Johannes, A - 4621 Sipbachzell (AT); GASPAR, Armin, AT-4600 Wels (AT)
(74) Vertreter: Ofner, Clemens
(86) Internationale Anmeldenummer: PCT/AT2009/000023
(87) Internationale Veröffentlichungsnummer: WO 2009/092125

(56) Entgegenhaltungen:
- EP-A- 0 620 075
- DE-A1- 10 015 506
- GB-A- 185 942
- GB-A- 2 192 821
- GB-A- 2 220 163
- US-A1- 2007 243 009

## Beschreibung

Die Erfindung betrifft ein System zur Befestigung einer Gasdüse an einer an einem Schweißbrenner angeordneten Gasdüsenaufnahme, welche zur lösbaren Befestigung der Gasdüse ausgebildet ist.

Ebenso betrifft die Erfindung eine Gasdüse für einen Schweißbrenner, welche rohrformig ausgebildet ist und zumindest einen Düsenstock umschließt und an einer Gasdüsenaufnahme befestigt ist.

Es sind bereits Befestigungssysteme für Gasdüsen eines Schweißbrenners bekannt, bei denen die Gasdüse in einfacher Form direkt auf einen Grundkörper aufgesteckt wird. Hierzu sind meist Schlitze in der Gasdüse vorgesehen, durch deren Spannung die Gasdüse gehalten wird. Weiters sind auch Brenner bekannt, bei denen am Grundkörper eine Schraubverbindung zur Aufnahme der Gasdüse vorgesehen ist. Ebenso ist ein Befestigungssystem bekannt, bei welchem die Gasdüse durch eine kurze Drehbewegung fixiert wird, wie dies aus der DE 203 80 292 U1 bekannt ist.

Nachteilig ist bei derartigen Befestigungssystemen, dass für die Befestigung zusätzliche Mittel bzw. Herstellungsschritte an der Gasdüse, wie ein Gewinde, mehrere Schlitze oder zwei. Vorsprünge erforderlich sind. Insbesondere ist auch bei der DE 203 80 292 U1 nachteilig, dass zur Befestigung die Position der Gasdüse beachtet werden muss.

Die Aufgabe der Erfindung liegt daher darin, ein Befestigungssystem für eine steckbare und sehr einfach ausgebildete Gasdüse zu schaffen, dessen Funktion unabhängig von der Position der Gasdüse beim Aufschieben oder Aufstecken auf die Gasdüsenführung ist.

Gelöst wird die Aufgabe der Erfindung gemäß dem Schweißbrenner nach Anspruch 1.

Von Vorteil ist hierbei gemäß den Merkmalen von Anspruch 2, dass eine schnelle und sichere Befestigung durch eine kurze, von der Drehrichtung unabhängige Drehbewegung gegeben ist und die Position der Gasdüse vor der Befestigung nicht relevant ist. Die Gasdüse kann daher einfach aufgesteckt werden. Des Weiteren ist dadurch ein einfacher Austausch der für das Befestigungssystem erforderlichen Verschleißteile gewährleistet.

Von Vorteil sind auch die Merkmale nach den Ansprüchen 3 bis 5, welche die Drehung des Fixierelements durch ein einfaches Verdrehen der Gasdüse und eine einfache Lösung und Entfernung der Gasdüse ermöglichen.

Die vorliegende Erfindung wird anhand der beigefügten, schematischen Zeichnungen näher erläutert.

Darin zeigen:
- Fig. 1: eine schematische Darstellung einer Schweißmaschine bzw. eines Schweißgerätes;
- Fig. 2: eine schematische Darstellung eines Schweißbrenners in Seitenansicht;
- Fig. 3: den Schweißbrenner gemäß Fig. 2 in Explosionsdarstellung;
- Fig. 4: eine Gasdüsenaufnahme in geschnittener Darstellung;
- Fig. 5: die Gasdüsenaufnahme dreidimensional dargestellt;
- Fig. 6: ein Fixierelement in Seitenansicht;
- Fig. 7: das Fixierelement in dreidimensionaler Ansicht;
- Fig. 8: eine Gasdüse in geschnittener Darstellung;
- Fig. 9: die Gasdüse dreidimensional dargestellt;
- Fig. 10: die Komponenten des Befestigungssystems zusammengebaut und geschnitten dargestellt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

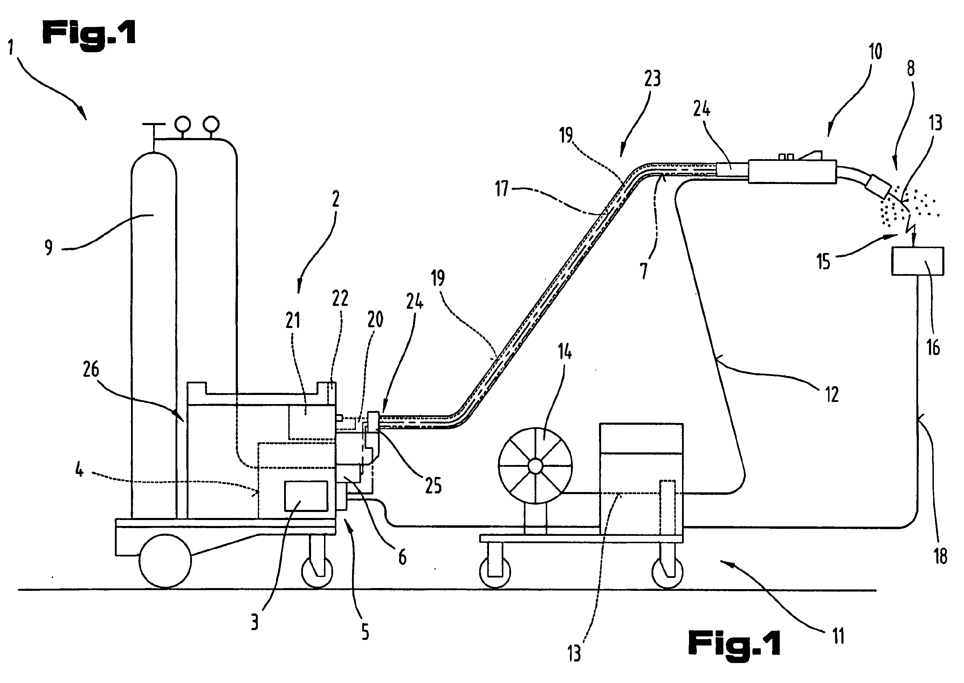

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaliglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der nicht abschmelzenden Elektrode (nicht dargestellt)und einem Werkstück 16 wird über eine Schweißleitung 17 vom Leistungsteil 3 der Stromquelle 2 dem Schweißbrenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/ oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 10 als luftgekühlter Schweißbrenner 10 ausgeführt werden kann.

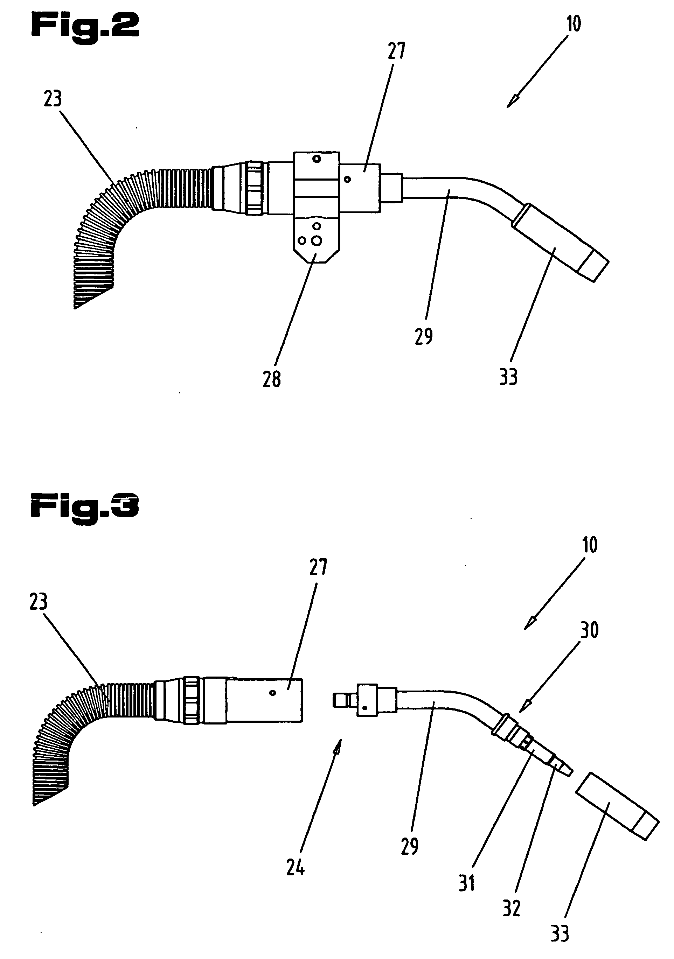

Allgemein sei zu den folgenden Figuren 2 bis 10 erwähnt, dass diese in Zusammenschau zu betrachten sind.

In den Fig. 2 und 3 ist ein stark vereinfachter Aufbau eines durch einen handelsüblichen MIG-Brenner gebildeten Schweißbrenners 10 dargestellt. Dabei zeigt Fig. 2 den Schweißbrenner 10 in zusammengebautem Zustand mit einer an einem Halteteil 27 bzw. Brennergriff angeordneten Halterung 28 für einen maschinellen Einsatz, insbesondere einer Roboterschweißanlage, die bei einem handgeführten Schweißbrenner 10 entfallen kann. Fig. 3 zeigt eine Explosionsdarstellung der wesentlichen Komponenten des Schweißbrenners 10, nämlich dem Schlauchpaket 23, dem Halteteil 27, einem Rohrbogen 29, einer Gasdüsenaufnahme 30, einem Düsenstock 31, einem Kontaktrohr 32 und einer Gasdüse 33. Diese Komponenten werden hauptsächlich mit aus dem Stand der Technik bekannten Methoden miteinander verbunden. Beispielsweise wird der Rohrbogen 29 über die Kupplungsvorrichtung 24 mit dem Schlauchpaket 23 bzw. dem Halteteil 27 verbunden sowie die Gasdüse 33 an der Gasdüsenaufnahme 30 befestigt.

Erfindungsgemäß erfolgt die Befestigung der Gasdüse 33 an der Gasdüsenaufnahme 30 über eine an der Gasdüsenaufnahme 30 angeordnete Excenteraufnahme 34. Diese Excenteraufnahme 34 in Kombination mit einem Fixierelement 35 ermöglicht eine äußerst flexible Befestigungsmöglichkeit der Gasdüse 33.

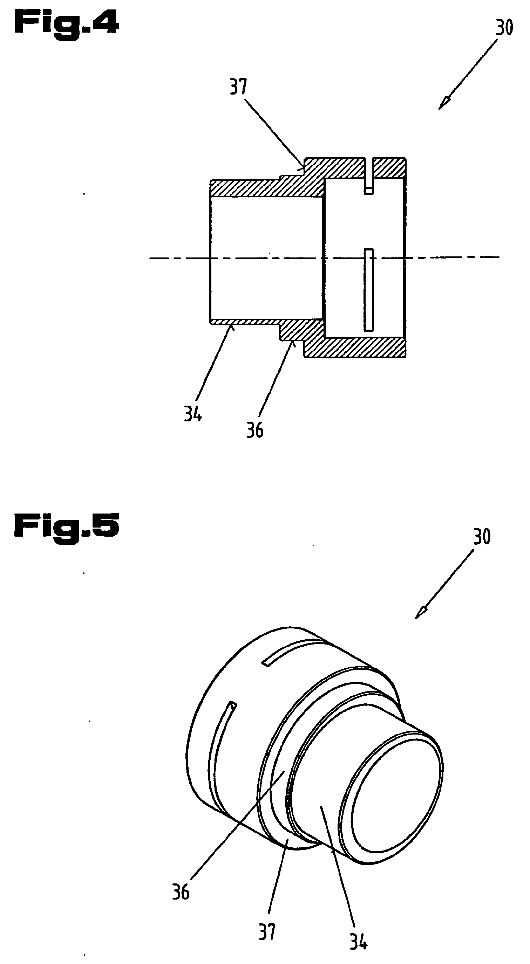

Die Gasdüsenaufnahme 30 mit der erfindungsgemäßen Excenteraufnahme 34 ist detailliert in den Fig. 4 und 5 dargestellt. Aus dieser Schnittdarstellung ist im Wesentlichen die stufenartige Form der Gasdüsenaufnahme 30 ersichtlich. Dabei ist die niedrigste bzw. erste Stufe, das heißt der Teil der Gasdüsenaufnahme 30 mit dem geringsten Außendurchmesser, exzentrisch und zur Aufnahme des Fixierelements 35 ausgebildet und stellt demzufolge die Excenteraufnahme 34 dar. Die Schnittdarstellung zeigt dabei sowohl die niedrigste als auch die höchste Stelle der exzentrischen Stufe. Somit ist gewährleistet, dass die Gasdüse 33 befestigt werden kann. Damit jedoch die Längsmittelachse der Gasdüse 33 im Wesentlichen dem Verlauf des Schweißdrahtes 13 entspricht, ist die zweite Stufe als Führungs- bzw. Zentrierungsfläche 36 für die Gasdüse 33 ausgebildet. Schlussendlich ist die Stirnseite der dritten Stufe als Anschlagsfläche 37 für die Gasdüse 33 ausgebildet. Ebenso weist die Gasdüsenaufnahme 30 eine Öffnung auf, sodass diese bevorzugt durch eine Presspassung am Rohrbogen 29 befestigt werden kann.

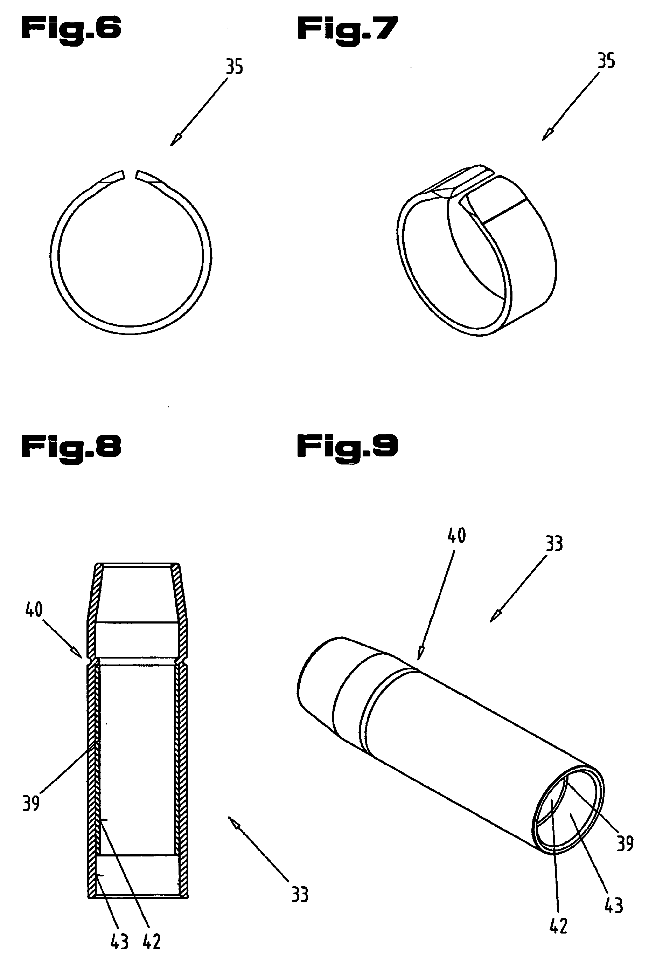

Das Fixierelement 35 kann - wie in Fig. 6 und Fig. 7 detailliert dargestellt - beispielsweise durch einen Federring bzw. einen offenen Ring gebildet sein. Aus diesen Abbildungen ist zudem ersichtlich, dass die offenen Enden des Fixierelements 35 aufgebogen sind, sodass dieses im Wesentlichen die Form eines Excenters aufweist. Der Sinn dieser Konstruktion besteht darin, dass sich bei einer Positionierung des Fixierelements 35 an der Excenteraufnahme 34 die offenen Enden des Fixierelements 35 an der dünnsten Stelle der Excenteraufnahme 34 befinden, sodass im Wesentlichen ein bündiger Abschluss in radialer Richtung mit der zylindrischen Führungsfläche 36 hergestellt ist. Somit ist gewährleistet, dass die Gasdüse 33 bis zur Anschlagsfläche 37 geschoben bzw. gesteckt werden kann. Ebenso dienen die aufgebogenen Enden dazu, dass bei einer Drehbewegung der Gasdüse 33 das Fixierelement 35 mitgedreht wird. Dies ist darauf zurückzuführen, dass aufgrund der exzentrischen Form des Fixierelements 35 dieses in der Gasdüse 33 eingeklemmt wird.

Neben der Führungsfläche 36 bildet auch zumindest ein Teil des Düsenstocks 31 eine zweite Führungsfläche 38 für die Gasdüse 33. Diese zylindrische Führungsfläche 38 weist bevorzugt einen geringeren Durchmesser als die koaxiale zylindrische Führungsfläche 36 auf, sodass zumindest eine elektrische Isolierung der Gasdüse 33 gegenüber dem Düsenstock 31 verwendet werden kann. Dies ist in den Fig. 8 und 9 dargestellt. Grundsätzlich ist die Gasdüse 33 für das erfindungsgemäße Befestigungssystem rohrförmig ausgebildet, wodurch eine kostengünstige Herstellung gewährleistet ist. Aus diesem Grund ist auch ein in der Gasdüse 33 angeordneter Isoliereinsatz 39 kostengünstig herstellbar bzw. verfügbar. Dieser Isoliereinsatz 39 wird dementsprechend an der Führungsfläche 38 des Düsenstocks 31 geführt, sodass der Isoliereinsatz 39 im Wesentlichen eine zur Führungsfläche 38 korrespondierende Führungsfläche 42 bildet. Diese Führungsfläche 42 bzw. der Isoliereinsatz 39 erstrecken sich dabei nicht über die gesamte Länge der Gasdüse 33. Bevorzugt weist dazu die Gasdüse 33 im vorderen Bereich eine Nut 40 auf, welche in der Gasdüse 33 einen Anschlag für den Isoliereinsatz 39 bildet. Durch diese Nut 40 ist im Wesentlichen auch der rohrförmige Teil der Gasdüse 33 definiert, dessen Länge entsprechend auf die weiteren Komponenten des Schweißbrenners 10 abgestimmt ist. Dabei ist für das erfindungsgemäße Befestigungssystem von Bedeutung, dass der Isoliereinsatz 39 kürzer ist als der rohrförmige Teil der Gasdüse 33. Daraus ergeben sich auch die angesprochenen unterschiedlichen Durchmesser der Führungsfläche 36 und der Führungsfläche 38, wobei diese konzentrisch zueinander sind. Der angesprochene Längenunterschied entspricht dabei der Summe der Länge der ersten und jener der zweiten Stufe der Gasdüsenaufnahme 30. Somit ist die Gasdüse 33 direkt an der Führungsfläche 36 geführt bzw. wird das Fixierelement 35 von der Gasdüse 33 entsprechend gedreht. Demzufolge korrespondiert zur Führungsfläche 36 der Gasdüsenaufnahme 30 eine Führungsfläche 43 in der Gasdüse 33. Des Weiteren ergibt sich aus dem oben genannten Längenunterschied eine Stufe bzw. ein Anschlag innerhalb der Gasdüse 33, welche im Wesentlichen das Fixierelement 35 an der Excenteraufnahme 34 positioniert, sodass dieses nicht entlang der Längsachse verschiebbar ist.

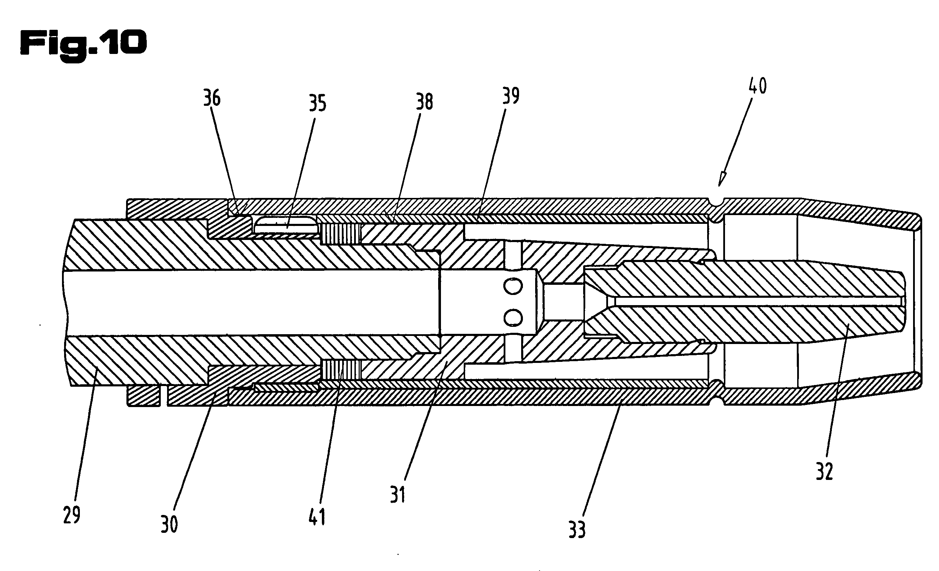

In Fig. 10 ist nun die am Rohrbogen 29 gemäß dem erfindungsgemäßen Befestigungssystem befestigte Gasdüse 33 im Schnitt dargestellt. Hieraus sind insbesondere die Führungsfläche 36 und die Führungsfläche 38 deutlich ersichtlich, welche die Grundvoraussetzung für eine zentrische Befestigung und eine Führung für die Gasdüse 33 darstellen. Ebenso ist der Federring als Fixierelement 35 deutlich erkennbar, wobei die Position des Fixierelements 35 auf der Excenteraufnahme 34 so gewählt ist, dass die Gasdüse 33 aufgesteckt werden kann, d.h. dass die beiden offenen Enden des Fixierelementes 35 hinsichtlich ihrer radialen Höhe praktisch bündig mit der Führungsfläche 36 abschließen.

Wird nun die Gasdüse 33 kurz in eine beliebige Richtung gedreht, so werden entsprechend die offenen Enden des Fixierelements 35 mitgedreht, sodass sich diese zwischen Gasdüse 33 und Excenteraufnahme 34 verklemmen und die Gasdüse 33 in der Führung eingeklemmt und befestigt ist. Zum Lösen der Verbindung ist die Gasdüse 33 entsprechend in die entgegengesetzte Richtung zu drehen, bis sich die offenen Enden in der dargestellten Position befinden, sodass die Gasdüse 33 abgezogen werden kann. Für den Benutzer ist diese Position in einfacher Weise dadurch zu erkennen, dass sich die Gasdüse 33 in diesem kleinen Bereich - sprich der gezeigten Position - sehr leicht drehen lässt.

Da das Fixierelement 35 durch die offenen Enden eine gewisse Spannung aufweist, ist dadurch auch ein selbsthaltender Sitz auf der Excenteraufnahme 34 gewährleistet. Das heißt, dass beim Lösen der Gasdüse 33 das Fixierelement 35 selbständig in dieser Position bleibt, sodass beim nächsten Aufstecken der Gasdüse 33 diese sofort durch eine kurze Drehbewegung befestigt werden kann.

Auch ist noch aus Fig. 10 ersichtlich, dass zwischen Düsenstock 31 und Gasdüsenaufnahme 30 ein Isolierring 41 angeordnet ist, welcher zumindest eine elektrische Isolierung gegenüber der Gasdüsenaufnahme 30 bzw. der Gasdüse 33 bewirkt. Zusätzlich verlängert dieser die Führungsfläche des Düsenstocks 31 und bildet einen Anschlag für das Fixierelement 35. Das heißt, dass beim Abziehen der Gasdüse 33 das Fixierelement 35 durch den Isolierring 41 an der Excenteraufnahme 34 gehalten wird.

Durch ein derartiges Befestigungssystem ist in vorteilhafter Weise ein einfaches Tauschen aller Teile des Befestigungssystems, sprich Gasdüse 33, Düsenstock 31, Isolierring 41 und Fixierelement 35, gegeben. Dies ist insofern von Bedeutung, als es sich bei den angesprochenen Teilen im Wesentlichen um Verschleißteile handelt, welche entsprechend regelmäßig getauscht werden müssen.

Des Weiteren kann die erfindungsgemäße Gasdüsenaufnahme 30 des erfindungsgemäßen Befestigungssystems auch lösbar am Rohrbogen 29 befestigt sein, beispielsweise durch eine selbst sichernde Schraubverbindung oder dergleichen. Dies bietet den Vorteil, dass bei einer zu starken Abnutzung der Excenteraufnahme 34 auch die Gasdüsenaufnahme 30 als Verschleißteil in einfacher Weise getauscht werden kann. Hierzu ist es entsprechend auch denkbar, dass die Excenteraufnahme 34 an der Gasdüsenaufnahme 30 lösbar befestigt ist, sodass bei zu starkem Verschleiß nur letztere gewechselt werden muss.

Im Allgemeinen sei noch erwähnt, dass das erfindungsgemäße Befestigungssystem und die erfindungsgemäße Gasdüse nicht auf den Einsatz an einem Schweißbrenner beschränkt sind, sondern in gleicher Form auch für Schneidbrenner eingesetzt werden können.

Der Ordnung halber sei abschließend daraufhingewiesen, dass zum besseren Verständnis des Aufbaus der erfindungsgemäßen Vorrichtungen diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 4 bis 10 gezeigten Ausführungen den Gegenstand von eigenständigen erfindungsgemäßen Lösungen bilden. Die diesbezüglichen erfindungsgemäßen Aufgaben und Lösungen sind den Detailbeschreibungen dieser Figuren zu entnehmen.

**Bezugszeichenaufstellung**

| | | | |
|---|---|---|---|
| 1 | Schweißgerät | 41 | Isolierring |
| 2 | Stromquelle | 42 | Führungsfläche |
| 3 | Leistungsteil | 43 | Führungsfläche |
| 4 | Steuervorrichtung | | |
| 5 | Umschaltglied | | |
| | | | |
| 6 | Steuerventil | | |
| 7 | Versorgungsleitung | | |
| 8 | Gas | | |
| 9 | Gasspeicher | | |
| 10 | Schweißbrenner | | |
| | | | |
| 11 | Drahtvorschubgerät | | |
| 12 | Versorgungsleitung | | |
| 13 | Schweißdraht | | |
| 14 | Vorratstrommel | | |
| 15 | Lichtbogen | | |
| | | | |
| 16 | Werkstück | | |
| 17 | Schweißleitung | | |
| 18 | Schweißleitung | | |
| 19 | Kühlkreislauf | | |
| 20 | Strömungswächter | | |
| | | | |
| 21 | Wasserbehälter | | |
| 22 | Ein- und/oder Ausgabevorrichtung | | |
| 23 | Schlauchpaket | | |
| 24 | Kupplungsvorrichtung | | |
| 25 | Zugentlastungsvorrichtung | | |
| | | | |
| 26 | Gehäuse | | |
| 27 | Halteteil | | |
| 28 | Halterung | | |
| 29 | Rohrbogen | | |
| 30 | Gasdüsenaufnahme | | |
| | | | |
| 31 | Düsenstock | | |
| 32 | Kontaktrohr | | |
| 33 | Gasdüse | | |
| 34 | Excenteraufnahme | | |
| 35 | Fixierelement | | |
| | | | |
| 36 | Führungsfläche | | |
| 37 | Anschlagsfläche | | |
| 38 | Führungsfläche | | |
| 39 | Isoliereinsatz | | |
| 40 | Nut | | |

## Patentansprüche

1. Schweißbrenner (10) mit einer Gasdüsenaufnahme (30), welche zur lösbaren Befestigung einer Gasdüse an dem Schweißbrenner (10) ausgebildet ist, wobei ein Teilabschnitt der Gasdüsenaufnahme (30) exzentrisch als Excenteraufnahme (34) ausgebildet ist, **dadurch gekennzeichnet,**
**dass** die Excenteraufnahme (34) der Gasdüsenaufnahme (30) ein ringförmiges Fixierelement (35) mit offenen Enden aufnimmt,
**dass** durch eine erste zylindrische Führungsfläche (36) der Gasdüsenaufnahme (30) in Kombination mit einer zweiten zylindrischen Führungsfläche (38) eines Düsenstocks (31) des Schweißbrenners (10) eine Führung für die Gasdüse (33) gebildet ist und die Gasdüse (33) durch eine Drehbewegung befestigbar ist, wobei die offenen Enden des Fixierelements (35) aufgebogen sind, sodass dieses die Form eines Excenters aufweist und die offenen Enden des Fixierelementes (35) wenn die Gasdüse (33) in eine beliebige Richtung gedreht wird, mitgedreht werden, sodass sich diese zwischen Gasdüse (33) und Excenteraufnahme (34) verklemmen und die Gasdüse (33) in der Führung eingeklemmt und befestigt ist und
**dass** die erste zylindrische Führungsfläche (36) einen größeren Durchmesser aufweist als die zweite zylindrische Führungsfläche (38) und zu dieser koaxial ist.

2. Schweißbrenner nach Anspruch 1, **dadurch gekennzeichnet, dass** das Fixierelement (35) in beliebig aufgeschobener oder aufgesteckter Position am exzentrischen Teil der Gasdüsenaufnahme (30) in beliebiger Drehrichtung verdrehbar ist, wobei sich das Fixierelement(35) zur Aufnahme der Gasdüse (33) in einer Drehstellung befindet, in welcher ein in radialer Richtung bündiger Abschluss mit dem weiteren Teil der Gasdüsenaufnahme (30) gewährleistet ist.

3. Schweißbrenner nach Anspruch 1 oder 2, **dadurch gekennzeichnet, dass** das Fixierelement (35) durch eine Drehbewegung der Gasdüse (33) verdrehbar ist und die Gasdüse (33) in der Führung einklemmbar und befestigbar ist.

4. Schweißbrenner nach einem der Ansprüche 1 bis 3, **dadurch gekennzeichnet, dass** das Fixierelement (35) durch eine entgegengesetzte Drehbewegung verdrehbar ist und die Gasdüse (33) dadurch von der Führung lösbar und entfernbar ist.

5. Schweißbrenner nach einem der Ansprüche 1 bis 4, **dadurch gekennzeichnet, dass** das Fixierelement (35) durch einen offenen Ring gebildet ist, dessen Enden gegenüber dem Umriss des kreisförmigen Ringteiles in radialer Richtung erhöht sind.

## Claims

1. A welding torch (10) with a gas nozzle holder (30), which is configured for the removable attachment of a gas nozzle on the welding torch (10), wherein a partial section of the gas nozzle holder (30) is configured eccentrically as an eccenter mount (34), **characterized in that**
the eccenter mount (34) of the gas nozzle holder (30) receives a ring-shaped fixing element (35) with open ends,
a guide for the gas nozzle (33) is formed by a first cylindrical guiding surface (36) of the gas nozzle holder (30) in combination with a second cylindrical guiding surface (38) of a nozzle holder (31) of the welding torch (10), and the gas nozzle (33) is able to be attached by a rotary movement, wherein the open ends of the fixing element (35) are bent up, so that the latter has the form of an eccentric and the open ends of the fixing element (35) are co-rotated when the gas nozzle (33) is rotated in an arbitrary direction, so that these become clamped between gas nozzle (33) and eccenter mount (34) and the gas nozzle (33) is clamped and fastened in the guide and
the first cylindrical guide surface (36) has a greater diameter than the second cylindrical guide surface (38) and is coaxial thereto.

2. The welding torch according to claim 1, **characterized in that** the fixing element (35) is rotatable in an arbitrary rotation direction in an arbitrary slid-on or stuck-on position on the eccentric part of the gas nozzle holder (30), wherein the fixing element (35) for receiving the gas nozzle (33) is situated in a rotary position in which a closure that is flush in radial direction with the additional portion of the gas nozzle holder (30) is ensured.

3. The welding torch according to claim 1 or 2, **characterized in that** the fixing element (35) is rotatable by a rotary movement of the gas nozzle (33), and the gas nozzle (33) is able to be clamped and attached in the guide.

4. The welding torch according to one of claims 1 to 3, **characterized in that** the fixing element (35) is rotatable by an opposite rotary movement and the gas nozzle (33) is thereby able to be detached and removed from the guide.

5. The welding torch according to one of claims 1 to 4, **characterized in that** the fixing element (35) is formed by an open ring, the ends of which are raised in radial direction relative to the outline of the circular ring part.

## Revendications

1. Chalumeau de soudage (10) muni d'un moyen récepteur de buse à gaz (30), qui est configuré pour une fixation amovible d'une buse à gaz sur le chalumeau de soudage (10), dans lequel un tronçon partiel du moyen récepteur de buse à gaz (30) est configuré excentrique en tant que moyen récepteur excentrique (34), **caractérisé en ce que** le moyen récepteur excentrique (34) du moyen récepteur de buse à gaz (30) reçoit un élément de fixation (35) à extrémités ouvertes,
par l'intermédiaire d'une première surface de guidage cylindrique (36) du moyen récepteur de buse à gaz (30) et d'une seconde surface de guidage cylindrique (38) d'un porte-buse (31) du chalumeau de soudage (10), un guide destiné à la buse à gaz (33) est obtenu, et la buse à gaz (33) peut être fixée par l'intermédiaire d'un mouvement de rotation, dans lequel les extrémités ouvertes de l'élément de fixation (35) sont incurvées de telle sorte que celui-ci présente la forme d'un excentrique, et les extrémités ouvertes de l'élément de fixation (35) vont tourner lorsque la buse à gaz (33) va être tournée dans une quelconque direction de manière à se coincer entre la buse à gaz (33) et le moyen récepteur excentrique (34), et la buse à gaz (33) est enserrée et fixée dans le guide, et la première surface de guidage cylindrique (36) présente un diamètre supérieur à la seconde surface de guidage cylindrique (38), et est coaxiale à celle-ci.

2. Chalumeau de soudage selon la revendication 1, **caractérisé en ce que** l'élément de fixation (35) peut être tourné selon une quelconque direction de rotation dans une position tirée ou montée sur la partie excentrique du moyen récepteur de buse à gaz (30), de sorte que l'élément de fixation (35) se trouve dans une position de rotation pour réception de la buse à gaz (33), dans laquelle un montage en affleurement avec l'autre partie du moyen récepteur de buse à gaz (30) est assuré.

3. Chalumeau de soudage selon la revendication 1 ou 2, **caractérisé en ce que** l'élément de fixation (35) peut être tourné par l'intermédiaire d'un mouvement de rotation de la buse à gaz (33), et la buse à gaz (33) peut être enserrée et fixée dans le guide.

4. Chalumeau de soudage selon l'une quelconque des revendications 1 à 3, **caractérisé en ce que** l'élément de fixation (35) peut être tourné par l'intermédiaire d'un mouvement de rotation opposé, par l'intermédiaire duquel la buse à gaz (33) peut être desserrée et enlevée du guide.

5. Chalumeau de soudage selon l'une quelconque des revendications 1 à 4, **caractérisé en ce que** l'élément de fixation (35) est constitué d'un anneau ouvert, dont les extrémités sont élevées dans une direction radiale par rapport au contour de la partie annulaire de forme circulaire.
